# EUROPÄISCHE PATENTSCHRIFT

(11) **EP 3 170 769 B1**
(45) Veröffentlichungstag und Bekanntmachung des Hinweises auf die Patenterteilung: **19.09.2018**
(21) Anmeldenummer: 16199440.5
(22) Anmeldetag: 18.11.2016
(51) Int. Cl.: B65D 90/34, F16K 27/02

(54) **VENTILGEHÄUSE FÜR EIN BELÜFTUNGSVENTIL UND BELÜFTUNGSVENTIL**
VALVE HOUSING FOR A VENTING VALVE AND VENTING VALVE
CORPS DE VANNE DE PURGE ET VANNE DE PURGE

(30) Priorität: 18.11.2015 DE 202015007993 U
(43) Veröffentlichungstag der Anmeldung: 24.05.2017
(73) Patentinhaber: Waggonbau Graaff GmbH, 31008 Elze (DE)
(72) Erfinder: Pana, Constantin, 31008 Elze (DE)
(74) Vertreter: Bremer, Ulrich

(56) Entgegenhaltungen:
- EP-A2- 2 826 692
- DE-U1-202015 103 372

## Beschreibung

Die Erfindung betrifft ein Ventilgehäuse für ein Belüftungsventil entsprechend dem Oberbegriff des Anspruchs 1 und ein Belüftungsventil.

Die Erfindung ist überall dort einsetzbar wo Belüftungsventile die mechanisch und/oder hydraulisch geöffnet oder geschlossen werden einsetzbar sind. Das ist an Tanks, Kessel- oder Vorratsbehältern der Fall.

Die EP 2 826 692 A2 beschreibt ein Zwangsbelüftungs- und Vakuum-Sicherheitsventil für einen Tank für die Beförderung gefährlicher Güter, bestehend aus einem gegossenen Gehäuse mit einem Rohr für einen Anschluss für eine Gaspendelleitung und eine untere Öffnung am Gehäuse einem Anschlussflansch im Gehäuse für Befestigungen am Tank, einem Ventilteller zum Verschließen der unteren Öffnung mit einem Schaft in einer Führung im Gehäuse, einer Feder zwischen einem verstellbaren Druckstück und einer Innenseite des Gehäuses einem Halter am Gehäuse und einem Steg am Ventilteller. Zwangsentlüftungsventile sind am Tank oben angeordnet und dienen dem Auslass eines Gases bei Überdruck. Bodenventile dienen dem Auslass eine Flüssigkeit.

In www.tkguard.com ist ein für diese Aufgabe geeignetes Bodenventil beschrieben, welches aus einem Gehäuse, einem Ventilteller, einer Betätigung, einer Ventilspindel, einer Feder und einem Deckel besteht. Bei einem Bruch der Feder verliert bei diesem Ventil die Ventilstange die Führung und kann den Ventilteller nicht mehr in die vorgegebene Richtung führen. Eine einfache Montage und Demontage der Feder in dieser Vorrichtung, insbesondere bei Auswechseln des Kopfes der die Ventilstange in ihrem oberen Bereich hält ist nicht möglich.

Die DE 20 2015 103 372.9 beschreibt ein Bodenventil für einen Kesselwagen, welches aus einem Gehäuse an einem Flansch, einem Verteiler, einer Betätigung, einer Öffnung für ein Medium, einem Ventilteller, einer Feder, einer Verschlussöffnung und einem Deckel besteht. Das Ventil wird mit seiner Öffnung für das Medium nach unten mittels Flansch dicht an den Tank oder Kesselwagen montiert. Das Ventil sieht einen Deckel in etwa in der Form eines zylindrischen Hutes vor. Dieser weist eine Führung für die Ventilspindel im Inneren des Deckels auf und eine Führung zum Gehäuse. Die Führung für die Ventilspindel kann eine runde zylinderförmige Führung darstellen, die eine Spielpassung um die Spindel aufweist. Die Führung am Gehäuse kann eine Zylinderform im unteren Bereich des Deckels darstellen, die geführt im Gehäuse nach unten, das heißt in Richtung auf den Ventilteller, gleiten kann. Die Feder, wie eine Spiralfeder, ist zwischen einem Federteller an der Ventilspindel und dem oberen Teil des Deckels angeordnet und zwischen diesen beiden Teilen verspannt. Bei einem Bruch der Feder wird der Deckel nicht mehr in seiner Lage gehalten und gleitet in Richtung auf den Ventilteller. Die Führung des Deckels auf der Seite des Gehäuses kann ein Führungsring darstellen oder mehrere, mindestens zwei Halterungen, die den Deckel führen und halten. Die Länge der Führung zum Gehäuse, von ihrem unteren bis zu ihrem oberen Umfang, ist größer als der Weg des Ventiltellers von einem vollständigen Schließen der Verschlussöffnung bis zu einem vollständigen Öffnen der Verschlussöffnung des Ventils. Durch diese Anordnung wird verhindert, dass bei einem Bruch der Feder die Ventilspinde ihre Führung durch den Deckel verliert. Dieser wird durch seine Führung immer parallel zur Ventilspindel und zum Gehäuse geführt. Der Ventilteller wird mittels Druck auf die Ventilspindel durch eine Betätigung geöffnet. Eine mechanische Betätigung am Deckel ist nicht vorhanden.

WO 2004/035343 A1 beschreibt eine Belüftungseinrichtung für einen Tank mit einem Vorbau wobei diese Vorrichtung einen Flansch am Ventilgehäuse aufweist. Eine Betätigungseinrichtung ist dem Dokument nicht zu entnehmen.

DE 20 2015 103 372 U1 beschreibt ein Ventilgehäuse und ein Bodenventil für einen Kesselwagen, wobei ein Bajonettverschluss zum Auswechseln der Feder vorgesehen ist. Die Dimensionierung des Bodenventils und des Gehäuses erlaubt aber keine schnellen Anschlüsse und Reparaturen.

DE 299 13 204 U1 beschreibt einen Bajonettverschluss und eine mechanische Betätigung mit einem Hebel, wobei ein einfaches und schnelles Befestigen an Tank oder Zuleitung nicht möglich ist.

Nachteilig aus den nach dem Stand der Technik bekannten Ventilgehäusen und Belüftungsventilen ist, dass ein Verschrauben mit dem Tank oder mit weiteren Anschlüssen aufgrund der ungünstigen Lage der Schraubverbindungen aufwendig ist. Weiterhin kann das Öffnen des Ventils in aller Regel nur durch das Lösen von Schraubverbindungen erfolgen, was bei Korrosion aufwendig sein kann.

Es ist daher Aufgabe der Erfindung ein Ventilgehäuse für eine hydraulische und eine mechanische Betätigung zu entwickeln bei dem ein schnelles Öffnen des Ventilkörpers und ein einfaches Entfernen der mechanischen Betätigung erfolgen kann und sowohl die Form des Ventilkörpers als auch die Anordnung der Öffnungen im Ventilkörper ein schnelles und sicheres Befestigen an einem Tank oder einer Zuleitung folgen kann.

Diese Aufgabe wird durch ein Ventilgehäuse nach den Merkmalen des ersten Patentanspruchs und ein Belüftungsventil nach den Merkmalen des Anspruchs 6 gelöst.

Die Unteransprüche geben vorteilhafte Ausgestaltungen der Erfindung wieder.

Die erfindungsgemäße Lösung sieht ein Ventilgehäuse für ein Belüftungsventil an einem Tank für eine mechanische oder/und eine hydraulische Betätigung vor, welches aus:
- dem Ventilgehäuse
- einem Anschluss mit einem Flansch am Ventilgehäuse
- einem Flansch mit Öffnungen zum Befestigen des Ventilgehäuses am Tank
- einer obere Öffnung für einen Deckel oder einer hydraulischen Betätigung und
- einer unteren Öffnung für eine mechanische Betätigung,
besteht.

An der Unterseite des Gehäuses sind mindestens drei Halterungen mit Öffnungen wie Langlöcher für Rastiernasen angeordnet sind, die geeignet sind Rastienasen eines Deckels aufzunehmen und mit diesen einen Bajonettverschluss zu bilden.

Die Querschnittsfläche zwischen dem Anschlussflansch und dem Eintritt des Anschlusses in das Ventilgehäuse ändert sich in ihrer Form. In etwa mittig zwischen dem Anschlussflansch und dem Eintritt im Bereich der oberen Öffnung weist die Querschnittsfläche die Form zweier Ellipsen auf, wobei die Halbachse der ersten Ellipse größer ist als die Halbachse der zweiten Ellipse.

Weiterhin ist es vorteilhaft, wenn zwischen dem Anschluss am Ventilgehäuse und dem Flansch eine Rippe angeordnet ist.

Die an der Rippe befindliche Ellipse der Querschnittsfläche weist eine größere Halbachse auf als die andere Ellipse.

Daraus ergibt sich günstige Dimensionierung für die Befestigungsteile.

Weiterhin ist es vorteilhaft, wenn im Ventilgehäuse eine Exzentrizität zwischen der Mittelachse des Flansches und der Mittelachse der Querschnittsfläche des Anschlusses zwischen dem Flansch und den Befestigungsteilen am Flansch des Gehäuses vorhanden ist. Dadurch ergibt sich für das Einsetzen einer hydraulichen Betätigung, dass diese mit dem Ventilteller in einer Linie liegt.

Das Ventilgehäuse zeichnet sich weiterhin dadurch aus, dass zwischen einer Mittelachse der oberen Öffnung und einer Mittelachse der unteren Öffnung eine Exzentrizität besteht.

Damit die Schraubverbindungen gut zugänglich sind, sind die Befestigungsteile des Ventilgehäuses beidseitig der Rippe und unter dem höchsten Punkt des Anschlusses angeordnet sind.

Die Erfindung besteht weiterhin aus einem Belüftungsventil bestehend aus dem erfindungsgemäßen Ventilgehäuse mit einem Deckel als Bestandteil einer mechanischen Betätigung an dem Rastiernasen angeordnet sind, die in die Halterungen an der Unterseite des Gehäuses einrasten, wobei zwischen dem Deckel und einem Ventilteller eine Druckfeder angeordnet ist, die zwischen dem Deckel und dem Ventilteller wirkt, wobei der Deckel um den Ventiltellerschaft verdrehbar ist und die Halterungen und die Rastiernasen einen Bajonettverschluss bilden.

Der Deckel besteht aus mindestens zwei Stegen, die einen oberen Ring mit den Rastiernasen und eine Führung für den Ventiltellerschaft miteinander verbinden. Vorteilhaft ist es, drei oder vier Stege anzuordnen, zwischen denen sich Öffnungen oder freie Flächen befinden.

Vorteilhaft ist es, wenn vier Rastiernasen in vier Langlöcher von vier Halterungen eingreifen.

Weiterhin ist am Deckel ein Steg angeordnet, an dem ein Hebel befestigt ist mit dem der Ventilschaft mittels einer Zugvorrichtung wie einem Seil nach unten gedrückt werden kenn, so dass der Ventilteller das Ventil öffnet.

Gegenüber oder über dieser mechanischen Betätigung kann eine hydrauliche Betätigung angeordnet sein.

Diese ist in der oberen Öffnung im Gehäuse an Stelle des Deckels angeordnet und kann aus einem Zylinder, einem Kolben, einem Rückschlagventil, einem Verschluss und Schwenkverschraubungen bestehen.

Vorteilhaft ist es, wenn das Belüftungsventil eine Exzentrizität zwischen der Achse der hydraulischen Betätigung und dem Kolben der hydraulischen Betätigung aufweist. Damit liegen der Kolben der hydraulichen Betätigung und der Ventiltellerschaft in einer Linie, so dass der Kolben den Ventilteller öffnen kann.

Dazu ist es vorteilhaft am Kolben in Richtung auf den Ventilteller eine Stellschraube mit Mutter anzuordnen, die gegen die mechanische Betätigung wirkt und mit der der Abstand zwischen Kolben und der mechanischen Betätigung einstellbar ist.

Die erfindungsgemäße Lösung hat den Vorteil, dass das Schließen von Schraubverbindungen zwischen dem Ventilkörper und einem Tank oder dem Ventilgehäuse und einem weiteren Anschluss für das Montagepersonal ohne großen Aufwand erfolgen kann, eine hydraulische Betätigung mit geringem Aufwand in das in Ventilgehäuse eingesetzt werden kann, wobei ein Öffnen des Ventilgehäuses von unten und ein Entfernen der mechanischen Betätigung auch bei Korrosion schnell und zuverlässig möglich ist.

Im Folgenden wird die Erfindung an einem Ausführungsbeispiel und acht Figuren näher erläutert. Die Figuren zeigen:
- Fig. 1: Schnitt durch das Belüftungsventil mit mechanischer Betätigung,
- Fig. 2: Schnitt durch das Belüftungsventil mit hydraulischer Betätigung,
- Fig. 3: Perspektivische Darstellung des Belüftungsventils mit hydraulischer Betätigung,
- Fig. 4: Perspektivische Darstellung der hydraulischen Betätigung in Sicht von oben,
- Fig. 5: Perspektivische Darstellung der hydraulischen Betätigung in Sicht von unten,
- Fig. 6: Gehäuse des Belüftungsventils in Sicht von oben,
- Fig. 7: Schnitt A-A gemäß Figur 6,
- Fig. 8: Schnitt B-B gemäß Figur 6.

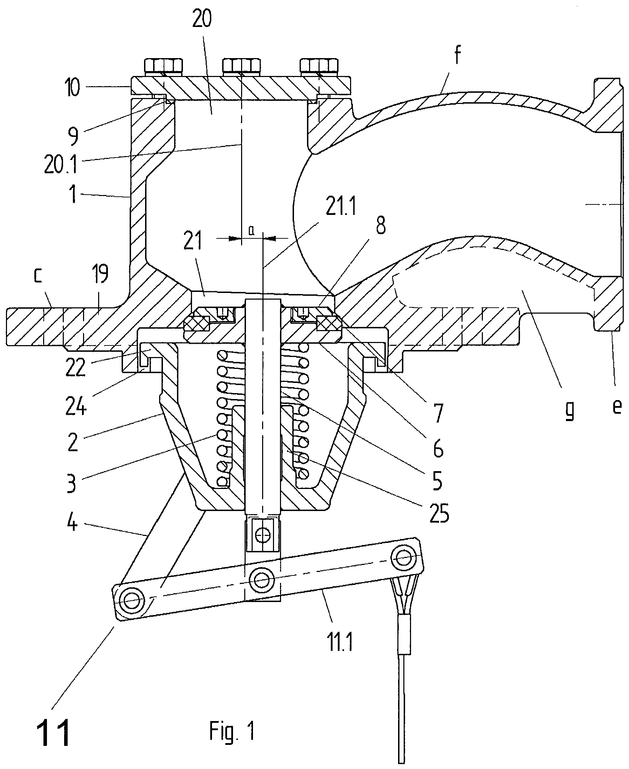

Die Figur 1 zeigt einen Schnitt durch das Belüftungsventil mit seinem Ventilgehäuse 1, welches eine obere Öffnung 20 und eine untere Öffnung 21 aufweist, wobei die obere Öffnung 20 mit Schrauben und dem Deckel 10 des Ventilgehäuses 1 verschlossen ist. Zwischen dem Deckel 10 und dem Ventilgehäuse 1 ist die Dichtung 9 angeordnet, die das Ventilgehäuse 1 nach oben luftdicht abschließt. Im Unterteil des Ventilgehäuses 1 befindet sich der Flansch 19 in dem Durchgangsbohrungen c angeordnet sind, mit denen das Ventilgehäuse 1 des Belüftungsventils am Tank befestigt ist. Zum Ventilgehäuse 1 gehört auch der Anschluss f des Flansches e der mit der Rippe g mit dem Flansch 19 des Ventilgehäuses 1 verbunden ist und diesem Stabilität verleiht. Die untere Öffnung 21 des Ventilgehäuses 1 ist durch den Ventilteller 6 verschlossen, der nach oben die Dichtung 7 aufweist, die vom Klemmring 8 gehalten wird. Vom Ventilteller 6 führt der Ventiltellerschaft 5 in eine Öffnung im Deckel 2. Zwischen Deckel 2 und dem Ventilteller 6 befindet sich die Druckfeder 3. Der Hebel 11.1 der mechanischen Betätigung 11 ist mit dem Steg 4 und dem Ventilschaft 5 beweglich verbunden, sodass über den Ventilschaft 5 der Ventilteller 6 nach unten zu öffnen ist. Dazu ist am Hebel 11.1 eine Zugvorrichtung wie ein Zugseil angeordnet. Der Ventilschaft 5 wird von einer Führung 25 gehalten, die sich im Deckel 2 befindet, der Halterklauen mit Rastiernasen 22 aufweist, die in einem Langloch 24 der Halterung 23 des Ventilgehäuses 1 gelagert sind und den Deckel 2 festhalten. Die Feder 3 hält den Ventilteller 6 geschlossen und sorgt gleichzeitig dafür, dass der Deckel 2 gegenüber dem Ventilgehäuse 1 verspannt ist. Die Mittelachse 20.1 der oberen Öffnung 20 weist eine Exzentrizität a gegenüber der Mittelachse 21.1 der unteren Öffnung 21 auf.

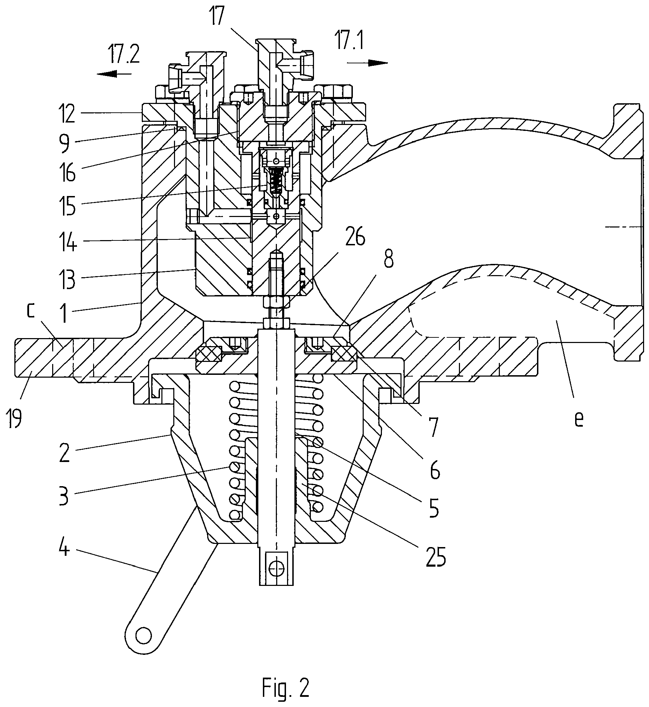

Die Figur 2 zeigt einen Schnitt durch das Belüftungsventil mit hydraulischer Betätigung 12. Diese hydraulische Betätigung 12 wurde an Stelle des Deckels 10 in das Ventilgehäuse 1 eingesetzt und verschließt die obere Öffnung 20, wobei Befestigungsschrauben und die Dichtung 9 den Ventilkörper 1 abdichtet. Die hydraulische Betätigung 12 weist nach oben einen Anschlussflansch 12.1 auf, an den sich ein zylindrischer Körper 12.2 anschließt. Weiterhin besteht die hydraulische Betätigung 12 aus dem Zylinder 13, in dem sich der Kolben 14 befindet, ein Rückschlagventil 15, ein Verschluss 16 und zwei Schwenkverschraubungen 17, wobei die Öffnung 17.1 der einen Schwenkverschraubung 17 zur Pumpe führt und die andere Öffnung 17.2 der Schwenkverschraubung 17 zu einem Bodenventil. Der Kolben 14 der hydraulischen Betätigung 12 weist nach unten eine Stellschraube 26 mit Mutter auf, mit der der Kolben gegen den Ventilschaft 5 drücken und dadurch den Ventilteller 6 gegen die Kraft der Feder 3 öffnen kann. Mit der Stellschraube 26 kann ein bestimmter Abstand zwischen dem Kolben 14 und dem Ventiltellerschaft 5 eingestellt werden, die Mutter dient der Sicherung der Stellschraube 26. Das Öffnen des Ventiltellers 6 geschieht der Weise, dass die Pumpe eine Flüssigkeit durch die Öffnung 17.1 der Schwenkverschraubung 17 in Richtung auf den Kolben 14 drückt und dieser mit der Stellschraube 26 gegen den Ventilteller 6 wirkt und diesen gegen die Kraft der Druckfeder 3 öffnet. Das Schließen des Ventils erfolgt in umgekehrter Reihenfolge, in der Weise, dass Flüssigkeit durch die Öffnung 17.2 zum Bodenventil fließt, der Kolben 14 durch die Kraft der Druckfeder 3 nach oben gedrückt wird und die Flüssigkeit durch die Öffnung 17.1 in Richtung zur Pumpe die hydraulische Betätigung 12 verlässt.

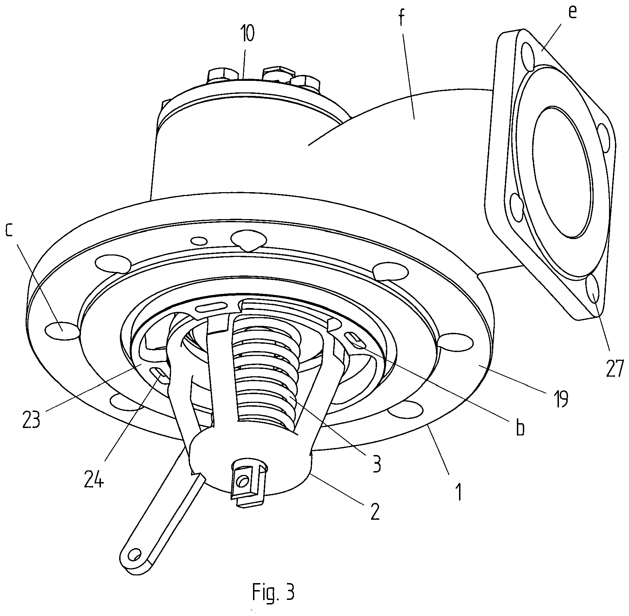

Die Figur 3 zeigt in perspektivischer Darstellung das Belüftungsventil mit der mechanischen Betätigung 11 von unten, wobei sich im oberen Teil des Ventilkörpers 1 der Anschluss f des Flansches e befindet an dem vier Öffnungen 27 für Befestigungen angeordnet sind.

Der Flansch 19 dient der Befestigung des Gehäuses 1 am Tank und weist Durchgangsbohrungen c auf, die um dessen Mittelachse angeordnet sind. Das Ventilgehäuse 1, welches nach oben mit dem Deckel 10 verschlossen ist, weist nach unten vier Halterungen 23 mit Langlöchern 24 auf, in die die Rastiernasen 22 des Deckels 2 ragen. Der Deckel 2 besteht aus vier Stegen, die einen oberen Ring mit den Rastiernasen 22 und einer Führung 25, für den Ventiltellerschaft 5, verbinden. Der Deckel 2 wird gegen den Ventilteller 6 mittels der Druckfeder 3 verspannt. Der Deckel 2 ist einfach und schnell entfernbar, in dem dieser gegen die Kraft der Feder 3 gegen den Ventilteller 6 nach oben gedrückt und danach verdreht wird, sodass die Restiernasen 22 (nicht gezeigt) durch die Zwischenräume zwischen den Halterungen 23 nach unten gezogen werden können. Der Hebel 11.1 der mechanischen Betätigung 11 wird in Figur 3 nicht abgebildet.

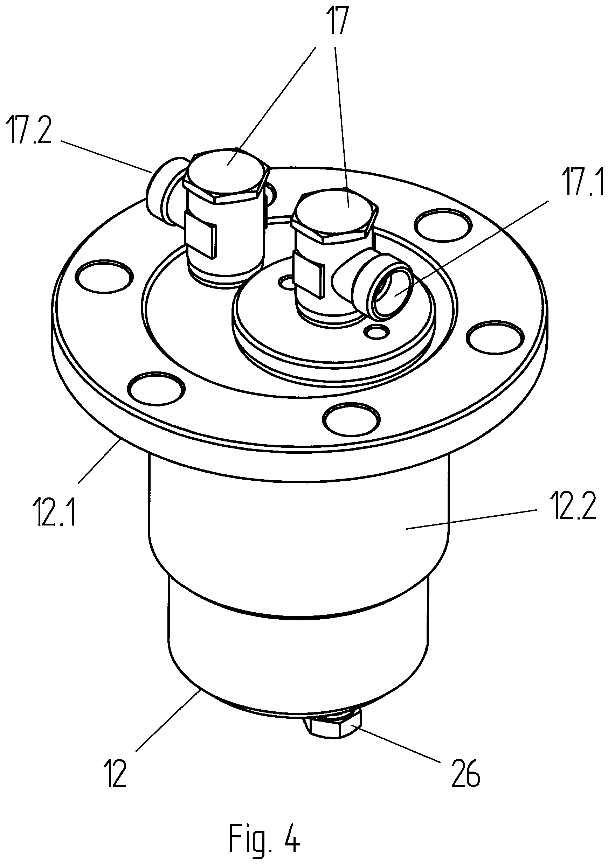

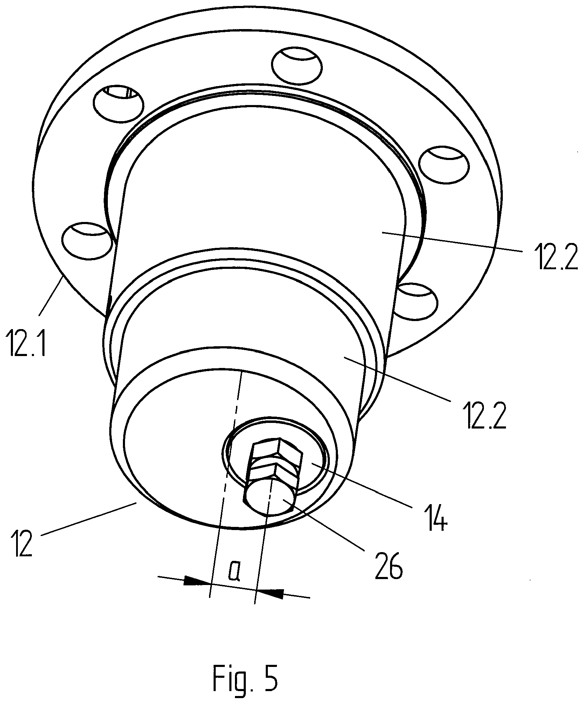

Die Figur 4 zeigt in perspektivischer Darstellung die hydraulische Betätigung 12, wie diese in das Ventilgehäuse 1 eingesetzt werden kann, mit den Schwenkverschraubungen 17 mit ihren Öffnungen 17.1, 17.2, durch die die Druckflüssigkeit in die hydraulische Betätigung 12 gelangt. Die hydraulische Betätigung 12 weist in ihrem oberen Teil den Anschlussflansch 12.1 und in ihrem unteren Teil die zylindrischen Körper 12.2 auf, wobei unten die Stellschraube 26 mit Mutter angeordnet ist. Um deren Anordnung deutlich abzubilden, ist in Figur 5 in perspektivischer Darstellung die hydraulische Betätigung 12 in Sicht von unten gezeigt, wobei die Stellschraube 26 mit Mutter mittig am unteren Ende des Kolbens 14 angeordnet ist. Die Mittelachse des Kolbens 14 ist gegenüber der Mittelachse des hydraulischen Körpers 12.2 um die Exzentrizität a versetzt.

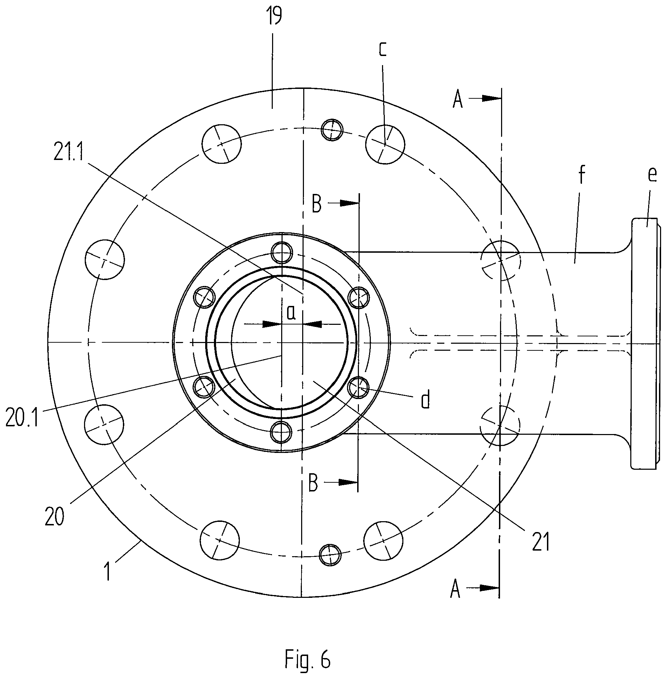

Die Figur 6 zeigt das Gehäuse 1 des Belüftungsventils in Sicht von oben. Die Abbildung macht deutlich, dass die Mittelachse 20.1 der oberen Öffnung 20 gegenüber der Mittelachse 21.1 der unteren Öffnung 21 um die Exzentrizität a versetzt ist. Weiterhin zeigt die Figur 6 wie die sechs Öffnungen der Gewindebohrungen d zum Befestigen der hydraulichen Betätigung 12 oder zum befestigen des Deckels 10 im Gehäuse 1 und die acht Durchgangsbohrungen im Flansch 19 des Gehäuses 1 so anzuordnen sind, dass die Befestigungsschrauben tief genug in das Ventilgehäuse 1 eingebracht und problemlos zu betätigen sind. Dazu sind die Durchgangsbohrungen c außerhalb der Mittelachsen und beidseitig der Rippe g angeordnet. Die Gewindebohrungen d im Ventilgehäuse 1 sind in zwei Fällen auf der Mittelachse der oberen Öffnung angeordnet und in vier Fällen außerhalb dieser Mittelachse. Weiterhin zeigt die Figur 6 den Verlauf der Schnittlinien B-B und A-A.
Die Schnittlinie A-A ist in etwa mittig zwischen der Schnittlinie B-B und dem Ende des Flansches e angeordnet.

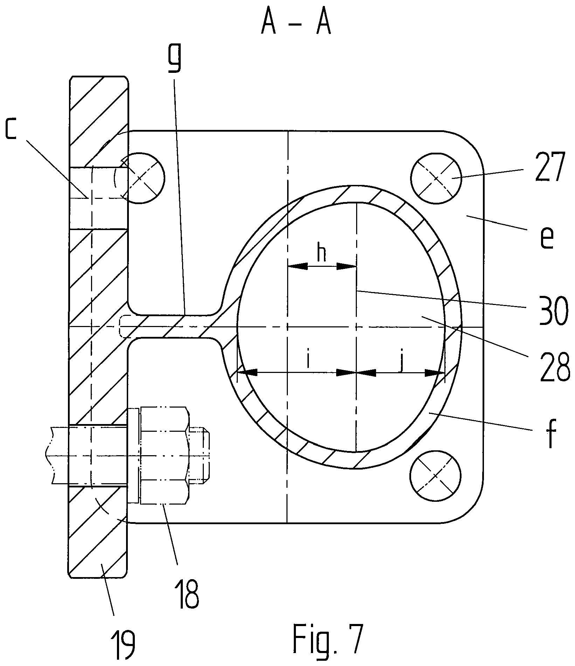

Die Figur 7 zeigt den Schnitt A-A gemäß Figur 6 mit dem Flansch e, dem Steg g und dem Flansch 19 mit seinen Befestigungsteilen 18. Der Flansch e weist an seinen Ecken Öffnungen 27 für die Befestigung eines Anschlusses am Flansch auf. Die Befestigungsteile 18 sind beidseitig der Rippe g angeordnet und damit schnell zugänglich. Weiterhin tritt keine Behinderung mit den Befestigungen auf, die in die Öffnungen 27 des Flansches e eingebracht werden. Die Querschnittsfläche 28 des Anschlusses f,deren Lage aus der Figur 6 ersichtlich ist, weist die Form zweier Ellipsen auf, wobei die Halbachsen i, j der beiden Ellipsen um die Exzentrizität h gegenüber der senkrechten Mittellinie 29 des Flansches e versetzt sind. Somit wird gesichert, dass der Abstand zwischen dem Flansch 19 und dem Anschluss f des Flansches e zum Gehäuse so groß ist, dass keine Behinderung der Montage und Demontage der Verbindungsteile eintritt.

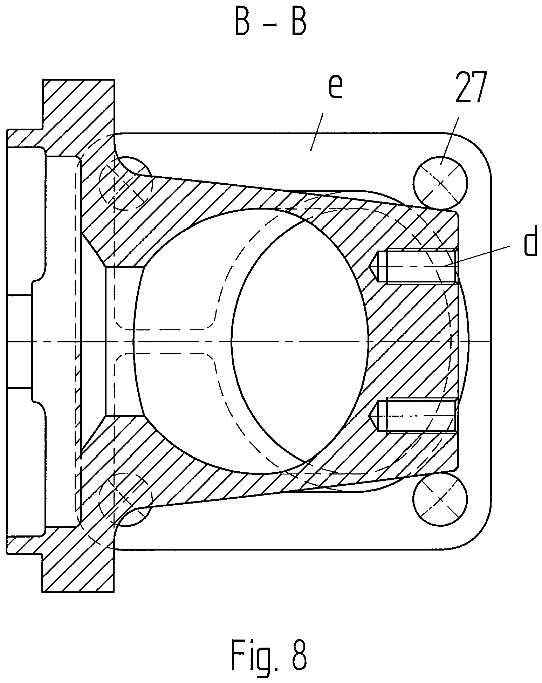

Die Figur 8 zeigt den Schnitt B-B gemäß Figur 6, der zeigt, dass durch die Anordnung der Gewindebohrung d im Ventilgehäuse 1, wie sie in Figur 6 gezeigt ist, so erfolgt, dass genügend Material im Ventilgehäuse 1 vorhanden ist um lange Schrauben einzubringen, sodass eine hohe Stabilität erreicht wird. Weiterhin wird aus dieser Figur die Lage der Öffnungen 27 im Flansch e deutlich, wobei Befestigungen in diesen Öffnungen 27 problemlos und ohne Behinderung erfolgen kann, was auf die günstige Dimensionierung des Ventilkörpers 1 und seiner Teile zurückzuführen ist. Darüber hinaus zeigt die Figur 8 die Querschnittsfläche mit der der Anschluss f im Bereich der oberen Öffnung 20 im Ventilgehäuse 1 mündet und die Querschnittsfläche des Anschlusses f mit der dieser im Flansch e mündet.

### Bezugszeichenliste

1 Ventilgehäuse
2 Deckel
3 Druckfeder
4 Steg
5 Ventiltellerschaft
6 Ventilteller
7 Dichtung zwischen Klemmring 8 und Ventilteller 6
8 Klemmring
9 Dichtung zwischen dem Deckel 10 oder der hydraulischen Betätigung 12 und dem Gehäuse 1
10 Deckel des Gehäuses 1
11 mechanischen Betätigung
11.1 Hebel der mechanischen Betätigung
12 hydraulische Betätigung
12.1 Anschlussflansch
12.2 zylindrischer Körper
13 Zylinder
14 Kolben
15 Rückschlagventil
16 Verschluss
17 Schwenkverschraubung
17.1 Öffnung der Schwenkverschraubung 17 zur Pumpe
17.2 Öffnung der Schwenkverschraubung 17 zum Bodenventil
18 Befestigungsteil des Ventilgehäuses zum Tank in Form einer Schraube, Mutter und einem Profilring
19 Flansch zum Befestigen des Ventilgehäuses am Tank
20 obere Öffnung des Ventilgehäuses 1
20.1 Mittelachse der oberen Öffnung 20
21 untere Öffnung des Gehäuses 1
21.1 Mittelachse der unteren Öffnung 21
22 Rastiernasen des Deckels 2
23 Halterungen des Ventilgehäuses
24 Langloch des Ventilgehäuses
25 Führung des Ventilschaftes 5 im Deckel 2
26 Stellschraube mit Mutter
27 Öffnung im Flansch e
28 Querschnittsfläche des Anschlusses f an der Schnittstelle
29 senkrechte Mittellinie des Flansches e
30 senkrechte Mittellinie der Öffnung 28

a. Exzentrizität zwischen Achse des Ventiltellers und Achse der hydraulischen Betätigung; gleiche Exzentrizität ist zwischen Hauptachse des Zylinders 13 und Achse des Kolbens 14 angeordnet
b. "Bajonett" Verschluss zwischen Ventilgehäuse 1 und Deckel 2
c. Durchgangsbohrung im Ventilgehäuse 1 um Befestigung des Belüftungsventils am Tank
d. Öffnung, wie Gewindebohrung im Ventilgehäuse 1 um Befestigung der hydraulischen Betätigung 12 oder des Deckels 10 am Ventilgehäuse 1
e. Flansch im Ventilgehäuse 1 um Anschluss zur Gaspendellung
f. Anschluss des Flansches "e" zum Ventilgehäuse 1
g. Rippe im Ventilgehäuse 1
h. Exzentrizität zwischen Flansch "e" und Anschluss "f"
i. Halbachse der Ellipse
j. Halbachse der Ellipse

## Patentansprüche

1. Ventilgehäuse (1) für ein Belüftungsventil an einem Tank für eine mechanische (11) oder/und eine hydraulische (12) Betätigung bestehend aus:
- dem Ventilgehäuse (1)
- einem Anschluss (f) mit einem Flansch (e) am Ventilgehäuse (1)
- einem Flansch (19) mit Öffnungen (d) zum Befestigen des Ventilgehäuses (1) am Tank
- einer obere Öffnung (20) für einen Deckel (10) oder der hydraulischen Betätigung (12)
- einer unteren Öffnung (21) für eine mechanische Betätigung (11), **gekennzeichnet durch**
- einen Bajonettverschluss **und dadurch, dass**
- an der Unterseite des Ventilgehäuses (1) mindestens drei Halterungen (23) mit Öffnungen wie Langlöcher (24) angeordnet sind, die geeignet sind, Rastiernasen (22) eines Deckels (2) aufzunehmen um mit diesen den Bajonettverschluss (b) zu bilden,
- der Anschluss (f) mit seiner Querschnittsfläche (28) die Form zweier Ellipsen aufweist, wobei die Halbachse (i) der ersten Ellipse größer ist als die Halbachse (j) der zweiten Ellipse, und
- eine Exzentrizität (h) zwischen der Mittelachse (29) des Flansches (e) und der Mittelachse (30) der Querschnittsfläche (28) des Anschlusses (f) zwischen dem Flansch (e) und den Befestigungsteilen (18) am Flansch (19) des Gehäuses vorhanden ist.

2. Ventilgehäuse (1) nach Anspruch 1, **dadurch gekennzeichnet, dass** zwischen dem Anschluss (f) und dem Flansch (19) eine Rippe (g) angeordnet ist.

3. Ventilgehäuse (1) nach den Ansprüchen 1 und 2, **dadurch gekennzeichnet, dass** die an der Rippe (g) befindliche Ellipse eine größere Halbachse (i) aufweist als die andere Ellipse.

4. Ventilgehäuse (1) nach einem der Ansprüche 1 bis 3, **dadurch gekennzeichnet, dass** zwischen einer Mittelachse (20.1) der oberen Öffnung (20) und einer Mittelachse (21.1) der unteren Öffnung (21) eine Exzentrizität (a) besteht.

5. Ventilgehäuse (1) nach einem der Ansprüche 1 bis 4, **dadurch gekennzeichnet, dass** die Befestigungsteile (18) des Ventilgehäuses (1) beidseitig der Rippe (g) und unter dem höchsten Punkt des Anschlusses (f) angeordnet sind.

6. Belüftungsventil bestehend aus einem Ventilgehäuse nach einem der Ansprüche 1 bis 5, **dadurch gekennzeichnet, dass** an einem Deckel (2) mit der mechanischen Betätigung (11) Rastiernasen (24) angeordnet sind, die in die Halterungen (23) an der Unterseite des Ventilgehäuses (1) einrasten, wobei zwischen dem Deckel (2) und einem Ventilteller (6) eine Druckfeder (3) angeordnet ist, die zwischen dem Deckel (2) und dem Ventilteller (6) wirkt, wobei der Deckel (2) um den Ventiltellerschaft (5) verdrehbar ist und die Halterung (23) und die Rastiernasen (24) einen Bajonettverschluss (b) bilden.

7. Belüftungsventil nach Anspruch 7, **dadurch gekennzeichnet, dass** die obere Öffnung (21) im Gehäuse eine hydraulische Betätigung (12) aufweist, die aus einem Zylinder (13), einem Kolben (14), einem Rückschlagventil (15), einem Verschluss (16) und Schwenkverschraubungen (17) besteht.

8. Belüftungsventil nach einem der Ansprüche 6 und 7, **dadurch gekennzeichnet, dass** eine Exzentrizität (a) zwischen den Achsen der hydraulischen Betätigung (12) und dem Kolben (14) der hydraulischen Betätigung (12) besteht.

9. Belüftungsventil nach einem der Ansprüche 6 bis 8, **dadurch gekennzeichnet, dass** die mechanische Betätigung (11) aus einem Steg (4) am Deckel (2), dem Ventiltellerschaft (5) mit dem Ventilteller (6) und der Druckfeder (3) und einem Hebel (11.1) zwischen dem Ventiltellerschaft (5) und dem Steg (4) besteht.

## Claims

1. Valve housing (1) for a venting valve on a tank for a mechanical (11) or/and a hydraulic (12) actuation consisting of:
- the valve housing (1)
- a connection (f) with a flange (e) on the valve housing (1)
- a flange (19) with openings (d) for securing the valve housing (1) on the tank
- an upper opening (20) for a lid (10) or the hydraulic actuation (12)
- a lower opening (21) for a mechanical actuation (11),
**characterised by**
- a bayonet closure
**and in that**
- on the lower side of the valve housing (1) at least three holders (23) with openings such as elongate holes (24) are arranged, which are suitable for accommodating latching lugs (22) of a lid (2) in order to form the bayonet closure (b) with the latter,
- the connection (f) with its cross-sectional surface (28) has the form of two ellipses, wherein the semi-axis (i) of the first ellipse is greater than the semi-axis (j) of the second ellipse, and
- an eccentricity (h) is present between the central axis of the flange (e) and the central axis (30) of the cross-sectional surface (28) of the connection (f) between the flange (3) and the securing parts (18) on the flange (19) of the housing,

2. Valve housing (1) according to Claim 1, **characterised in that** a rib (g) is arranged between the connection (f) and the flange (19).

3. Valve housing (1) according to Claims 1 and 2, **characterised in that** the ellipse located on the rib (g) has a greater semi-axis (i) than the other ellipse.

4. Valve housing (1) according to any one of Claims 1 to 3, **characterised in that** an eccentricity (a) exists between a central axis (20.1) of the upper opening (20) and a central axis (21.1) of the lower opening (21).

5. Valve housing (1) according to any one of Claims 1 to 4, **characterised in that** the securing parts (18) of the valve housing (1) are arranged on both sides of the rib (g) and below the highest point of the connection (f).

6. Venting valve consisting of a valve housing according to any one of Claims 1 to 5, **characterised in that** latching lugs (24) are arranged on a lid (2) with the mechanical actuation (11), which latching lugs latch into the holders (23) on the lower side of the valve housing (1), wherein a pressure spring (3) is arranged between the lid (2) and a valve disc (6), which pressure spring acts between the lid (2) and the valve disc (6), wherein the lid (2) is twistable about the valve disc shaft (5) and the holder (23) and the latching lugs (24) form a bayonet closure (b).

7. Venting valve according to Claim 6, **characterised in that** the upper opening (21) in the housing has a hydraulic actuation (12), which consists of a cylinder (13), a piston (14), a check valve (15), a closure (16) and swiveling screw-fittings (17).

8. Venting valve according to any one of Claims 6 and 7, **characterised in that** an eccentricity (a) exists between the axes of the hydraulic actuation (12) and the piston (14) of the hydraulic actuation (12).

9. Venting valve according to any one of Claims 6 to 8, **characterised in that** the mechanical actuation (11) consists of a web (4) on the lid (2), the valve disc shaft (5) with the valve disc (6) and the pressure spring (3) and a lever (11.1) between the valve disc shaft (5) and the web (4).

## Revendications

1. Boîtier de soupape (1) destiné à une soupape d'aération sur un réservoir pour un actionnement mécanique (11) ou/et un actionnement hydraulique (12) constitué :
- du boîtier de soupape (1)
- d'un raccord (f) avec une bride (e) sur le boîtier de soupape (1)
- d'une bride (19) avec des ouvertures (d) pour fixer le boîtier de soupape (1) sur le réservoir
- d'une ouverture supérieure (20) pour un couvercle (10), ou de l'actionnement hydraulique (12)
- d'une ouverture inférieure (21) pour un actionnement mécanique (11),
**caractérisé par**
- une fermeture à baïonnette
**et en ce que,**
- sur la face inférieure du corps de soupape (1) sont disposés au moins trois supports (23) avec des ouvertures, telles que des trous allongés (24), qui sont appropriées à recevoir des ergots d'encliquetage (22) d'un couvercle (2) avec lequel elles forment la fermeture à baïonnette (b),
- le raccord (f) présente, avec sa superficie de section (28), la forme de deux ellipses, le demi-axe (i) de la première ellipse étant supérieur au demi-axe (j) de la seconde ellipse, et
- une excentricité (h) existe entre l'axe central (29) de la bride (e) et l'axe central (30) de la superficie de section (28) du raccord (f) entre la bride (e) et les pièces de fixation (18) sur la bride du boîtier.

2. Boîtier de soupape (1) suivant la revendication 1, **caractérisé en ce qu'**une nervure (g) est disposée entre le raccord (f) et la bride (19).

3. Boîtier de soupape (1) suivant les revendications 1 et 2, **caractérisé en ce que** l'ellipse située sur la nervure (g) présente un demi-axe (i) supérieur à celui de l'autre ellipse.

4. Boîtier de soupape (1) suivant une des revendications 1 à 3, **caractérisé en ce qu'**une excentricité (a) existe entre un axe central (20.1) de l'ouverture supérieure (20) et un axe central (21.1) de l'ouverture inférieure (21).

5. Boîtier de soupape (1) suivant une des revendications 1 à 4, **caractérisé en ce que** les pièces de fixation (18) du boîtier de soupape (1) sont disposées de part et d'autre de la nervure (g) et sous le point le plus haut du raccord (f).

6. Soupape d'aération constitué par un boîtier de soupape suivant une des revendications 1 à 5, **caractérisé en ce que** des ergots d'encliquetage (24) qui s'encliquètent dans les supports (23) sur la face inférieure du boîtier de soupape (1) sont disposés sur un couvercle avec l'actionnement mécanique (11), un ressort de compression (3) qui agit entre le couvercle (2) et la tête de soupape (6) étant disposé entre le couvercle (2) et une tête de soupape (6), le couvercle (2) pouvant être tourné autour de la tige de tête de soupape (5) et le support (23) et les ergots d'encliquetage (24) formant une fermeture à baïonnette (b).

7. Soupape d'aération suivant la revendication 6, **caractérisé en ce que** l'ouverture supérieure (21) dans le boîtier présente un actionnement hydraulique (12) qui est constitué par un cylindre (13), un piston (14), un clapet anti-retour (15), une fermeture (16) et des accouplements vissés orientables (17).

8. Soupape d'aération suivant une des revendications 6 et 7, **caractérisé en ce qu'**une excentricité (a) existe entre les axes de l'actionnement hydraulique (12) et le piston (14) de l'actionnement hydraulique (12).

9. Soupape d'aération suivant une des revendications 6 à 8, **caractérisé en ce que** l'actionnement mécanique (11) est constitué par une barrette (4) sur le couvercle (2), la tige de tête de soupape (5) avec la tête de soupape (6) et le ressort de compression (3) et un levier (11.1) entre la tige de tête de soupape (5) et la barrette (4).
